# EUROPÄISCHE PATENTANMELDUNG

(11) **EP 4 819 548 A1**
(43) Veröffentlichungstag der Anmeldung: **07.10.2026**
(21) Anmeldenummer: 25167620.1
(22) Anmeldetag: 01.04.2025
(51) Int. Cl.: H04L 12/12

(54) **ANORDNUNG ZUR DATENÜBERTRAGUNG IN EIN NETZWERK FÜR EINEN ELEKTROLYSEUR**

(71) Anmelder: Sunfire SE, 01237 Dresden (DE)
(72) Erfinder: Seitz, Markus, 01277 Dresden (DE); Kottra, Marton, 01309 Dresden (DE)
(74) Vertreter: Epping - Hermann - Fischer

(57) **Zusammenfassung**

Die Erfindung betrifft eine Anordnung (1) zur Datenübertragung in ein Netzwerk (2) umfassend eine Leitung (8), ein Netzwerk (2), sowie ein Modul (10) aufweisend ein Stellglied (5) und einen Elektrolyseur (6), wobei das Netzwerk (2) ein erstes Element (11) zum Einleiten von Daten umfasst, wobei das erste Element (11) Spannungspegel von der Leitung (8) erfasst und in dem Netzwerk (2) als Pegeldaten bereitstellt, wobei das Netzwerk (2) ein zweites Element (12) zum Verarbeiten der Pegeldaten zu Steuerdaten umfasst und wobei das Netzwerk ein drittes Element (13) zum Empfangen der Steuerdaten und zum Ansteuern des Stellgliedes (5) des Elektrolyseurs umfasst.

## Beschreibung

Die vorliegende Erfindung betrifft eine Anordnung zur Datenübertragung in ein Netzwerk für einen Elektrolyseur.

Moderne Anlagen zur Elektrolyse sind wünschenswerterweise skalierbar aufgebaut, um die von den Betreibern vorgegebenen Kapazitäten zu erreichen (z.B. Umwandlung einer definierten zur Verfügung stehenden elektrischen Leistung oder Herstellung einer bestimmten Menge an Wasserstoff).

Dabei wird nicht etwa nur die Größe der einzelnen Elektrolyseure den vorgegebenen Kapazitäten angepasst, sondern es werden Flotten bereitgestellt, die eine hohe Anzahl an einzelnen Elektrolyseuren aufweisen.

Bevorzugt sind eine definierte Anzahl von Elektrolyseuren jeweils wieder Modulen zugeordnet, die die Anzahl an Elektrolyseuren mit gemeinsamer Peripherie umfasst.

Herkömmlich muss jedes dieser Module einzeln angesteuert werden, was für den Betreiber der Flotte zumindest mit einem hohen Netzwerkaufwand verbunden ist.

Weiterhin müssen sicherheitsrelevante Anweisungen wie Notaus zuverlässig an die Elektrolyseure übertragen werden können. Die Übertragung dieser sicherheitsrelevanten Anweisungen in der üblichen zur Steuerung des Betriebs der Elektrolyseure bereitgestellten Netzinfrastruktur scheint aufgrund der Anfälligkeit in Bezug auf Cyber-Security, also der Anfälligkeit gegenüber Eingriffen von außen, problematisch.

Es ist eine Aufgabe der vorliegenden Erfindung die Defizite im Stand der Technik zumindest teilweise zu beheben.

Der Umfang der Erfindung ist durch die Ansprüche definiert.

Die Erfindung betrifft insbesondere eine Anordnung zur Datenübertragung in ein Netzwerk. Insbesondere dient die Anordnung der Übertragung von sicherheitsrelevanten Anweisungen in ein Netzwerk und einer daraus resultierenden Steuerung eines Elektrolyseurs.

Die Anordnung umfasst zumindest das Netzwerk, eine Leitung, die mit dem Netzwerk verbunden ist, sowie ein Modul mit einem Stellglied und dem Elektrolyseur.

Das Netzwerk ist so eingerichtet, dass es zum Ansteuern des Stellgliedes des Moduls geeignet ist.

Das Stellglied ist wiederum zum Eingreifen in den prozessualen Betrieb des Elektrolyseurs eingerichtet. Mit anderen Worten, das Netzwerk dient zum Eingreifen in den Betrieb eines Elektrolyseurs.

Das Netzwerk ist ein elektronisches Netzwerk und wie folgt aufgebaut. Das Netzwerk umfasst ein erstes Element, ein zweites Element und ein drittes Element.

Das erste Element ist zum Einleiten von Daten von außerhalb des Netzwerkes eingerichtet. Das erste Element kann dazu insbesondere elektrische Spannungspegel von der mit dem Netzwerk verbundenen Leitung erfassen und die erfassten Spannungspegel in dem Netzwerk als Pegeldaten bereitstellen.

Die von der Leitung übertragenen Spannungspegel können bevorzugt auf definierte Spannungspegel beschränkt sein. Insbesondere ist die Leitung bevorzugt dazu eingerichtet, zwei Spannungspegel zu übertragen, die die Zustände 0 bzw. 1 repräsentieren.

Die zwei Spannungspegel sind in einer Ausführungsform 0 Volt und 24 Volt. Überträgt die Leitung einen definierten höheren Spannungspegel, z.B. 24 Volt, gibt das erste Element bevorzugt einen Zustand 1 als Pegeldaten aus, überträgt die Leitung einen definierten niedrigeren Spannungspegel, z.B. 0 Volt, gibt das erste Element bevorzugt einen Zustand 0 als Pegeldaten aus (positive Logik), oder umgekehrt (negative Logik).

Das erste Element ist also bevorzugt ein elektrischer Analog-Digital-Wandler (A/D-Wandler) mit Netzwerkanschluss, bevorzugt ein Remote-A/D-Wandler (auch Remote-I/O, siehe auch unten).

Die klassische Nutzung der Ein- und Ausgänge des A/D-Wandlers wird dabei bevorzugt umgekehrt und analoge Anweisungen von mehreren analogen Eingängen werden bevorzugt in die gleiche digitale Anweisung an einem gemeinsamen digitalen Ausgang umgewandelt.

Das zweite Element im Netzwerk ist dazu eingerichtet, die vom ersten Element ausgegebenen Pegeldaten (z.B. 0 oder 1) zu empfangen und zu verarbeiten und in Steuerdaten für das dritte Element umzuwandeln. Das zweite Element kann also z.B. ein LAN-Switch sein.

Das erste und das zweite Element sind bevorzugt so beschaffen, dass die Elemente lokal (weit) getrennt voneinander angeordnet sein können.

Die Leitung(en) zum ersten Element ist/sind bevorzugt fest verdrahtet und bevorzugt als Zweidrahtleitung(en) ausgeführt.

Die Verbindung der ersten und des zweiten Elements im Netzwerk erfolgt über Datenkabel, bevorzugt per LAN (Local Area Network)-Standard.

Schließlich umfasst das Netzwerk ein drittes Element, das bevorzugt nah am zweiten Element angeordnet ist und mit diesem wiederum bevorzugt per Datenkabel, z.B. per LAN-Standard, verbunden ist.

Das dritte Element ist ein Aktor, der zum Empfangen der Steuerdaten und zum Ansteuern des Stellgliedes eingerichtet ist.

In einer Ausführung ist weiterhin ein viertes Element zum Bereitstellen der Spannungspegel vorgesehen, wobei das vierte Element mit der Leitung und einem externen Netzwerk gekoppelt ist.

Das vierte Element dient somit als Schnittstelle der Leitung(en) zum externen Netzwerk, z.B. dem Netzwerk des Betreibers des Elektrolyseurs, der durch das Netzwerk angesteuert wird.

Gemäß einer Ausführung repräsentiert die Leitung eine sicherheitsrelevante Anweisung, wobei, wenn mehrere der Leitungen vorgesehen sind, jede der Leitungen eine jeweils andere sicherheitsrelevante Anweisung repräsentiert.

Mit anderen Worten, es ist eine Anzahl an sicherheitsrelevanten Anweisungen vorgesehen, die über das Netzwerk an den Elektrolyseur weitergegeben werden. Für jede dieser Anweisungen ist bevorzugt eine separate Leitung vorgesehen.

Gemäß Ausführungen ist dem vierten Element eine Transformationseinheit vorgeschaltet, die dazu eingerichtet ist, mehrere mögliche Ereignisse in eine erschöpfte Anzahl an Anweisungen zu transformieren.

Die Anweisung können aus der Menge der Anweisungen Notaus, Gasalarm, Feueralarm, Überhitzung der Raumtemperatur und/oder Stickstoff-Versorgungs-Alarm ausgewählt sein.

Jede der Anweisungen kann je nach Ausführung des Netzwerkes zur Betätigung desselben Aktors bzw. Stellgliedes am Elektrolyseur führen oder zur Betätigung (jeweils) separater Stellglieder.

Zur Erhöhung der Netzwerk-Sicherheit ist das Netzwerk bevorzugt autark, also ohne Verbindung zu anderen Netzwerken und ohne Verbindung zu Internet oder Intranet aufgebaut.

Somit kann eine von außen manipulierte Auslösung der genannten sicherheitsrelevanten Aktionen weitgehend ausgeschlossen werden.

Das Netzwerk ist gemäß einer Ausführung derart ausgebildet ist, dass Daten lediglich in das Netzwerk eingeleitet werden (monodirektional) oder das Netzwerk ist derart ausgebildet, dass Daten bidirektional in das Netzwerk eingeleitet und aus dem Netzwerk ausgeleitet werden können, z.B. eine Bestätigung, dass der Notaus des Elektrolyseurs erfolgt ist und der Elektrolyseur abgeschaltet ist.

Gemäß einer Ausführung umfasst die Anordnung mehrere Leitungen. Das erste Element ist dann dazu eingerichtet, Spannungspegel von den mehreren Leitungen zu erfassen und die erfassten Spannungspegel in dem Netzwerk als Pegeldaten bereitzustellen.

Das erste Element umfasst also mehrere Eingänge, z.B. in Form von geeigneten Steckplätzen, an denen die Leitungen angeschlossen werden.

Das erste Element kann einen Ausgang oder mehrere Ausgänge umfassen, je nachdem, ob abhängig vom Eingangssignal dasselbe Stellglied oder unterschiedliche Stellglieder betätigt werden sollen.

Umfasst das erste Element mehrere Ausgänge sind jeweils entsprechend viele zweite Elemente und dritte Elemente mit Stellgliedern wie Ausgänge des ersten Elements im Netzwerk vorgesehen. Jedem zweiten Element ist ein drittes Element zugeordnet.

In einer Ausführungsform kann ein Ausgang des ersten Elements auch mehreren Eingängen zugeordnet sein. Daneben können weitere (separate) Ein- und korrespondierende Ausgänge vorgesehen sein.

In einer Ausführungsform kann das Modul mehrere Stellglieder umfassen, wobei das dritte Element dazu eingerichtet ist, die mehreren Stellglieder des Moduls anzusteuern. Eine Anweisung kann also die Betätigung mehrerer Stellglieder auslösen.

In einer Ausführungsform umfasst die Anordnung einen gemeinsamen ersten Schaltschrank und pro Modul einen separaten zweiten Schaltschrank, wobei das erste Element von dem zweiten Element derart räumlich distanziert angeordnet ist, dass das erste Element immer in dem gemeinsamen ersten Schaltschrank angeordnet ist und das zweite Element (12) jeweils in dem separaten zweiten Schaltschrank pro Modul angeordnet ist.

So kann im ersten Schaltschrank eine gemeinsame Schnittstelle für den Kunden/ den Betreiber des Elektrolyseurs bereitgestellt werden, über den alle Module angesteuert werden.

Die zweiten Schaltschränke können andererseits unmittelbar an den Modulen angeordnet werden. Somit lässt sich auch eine große Anordnung mit zahlreichen Modulen realisieren, wobei die Netzwerkanbindung für den Kunden einfach an einem Schaltschrank erfolgt.

Wie bereits angedeutet umfasst die Anordnung in Ausführungen mehrere Netzwerke und dieselbe Anzahl an Modulen bzw. mehrere Module und dieselbe Anzahl an Netzwerken.

Jedes der Netzwerke ist jeweils zum Ansteuern des Stellgliedes/der Stellglieder eines der Module und des entsprechenden Elektrolyseurs eingerichtet.

Die Leitung oder jede der mehreren Leitungen ist/sind dann jeweils parallelgeschaltet mit jedem der mehreren Netzwerke verbunden, sodass jedem der ersten Elemente des jeweiligen Netzwerkes in Gänze gleiche Spannungspegel bereitgestellt werden.

In Ausführungen sind die ersten Elemente der mehreren Netzwerke dann alle in dem gemeinsamen ersten Schaltschrank montiert und jedes der mehreren Module umfasst jeweils einen der separaten zweiten Schaltschränke, wobei das zweite Element jedes der Module jeweils separat in dem zweiten Schaltschrank des jeweiligen Moduls angeordnet ist.

Daneben kann ein weiteres Netzwerk, das sich über den ersten Schaltschrank und die zweiten Schaltschränke an den Modulen erstreckt, vorgesehen sein, das zur normalen Ansteuerung der Module während des Normalbetriebs dient. Die Schnittstelle des weiteren Netzwerkes zu externen Netzwerken des Kunden/Betreibers kann ebenfalls zentral im ersten Schaltschrank vorgesehen sein. Das weitere Netzwerk ist von dem Netzwerk getrennt.

Im Weiteren wird die Erfindung anhand von Ausführungsbeispielen und Figuren weiter erläutert. Die Beispiele sind nicht erschöpfend.

Die Figuren zeigen:

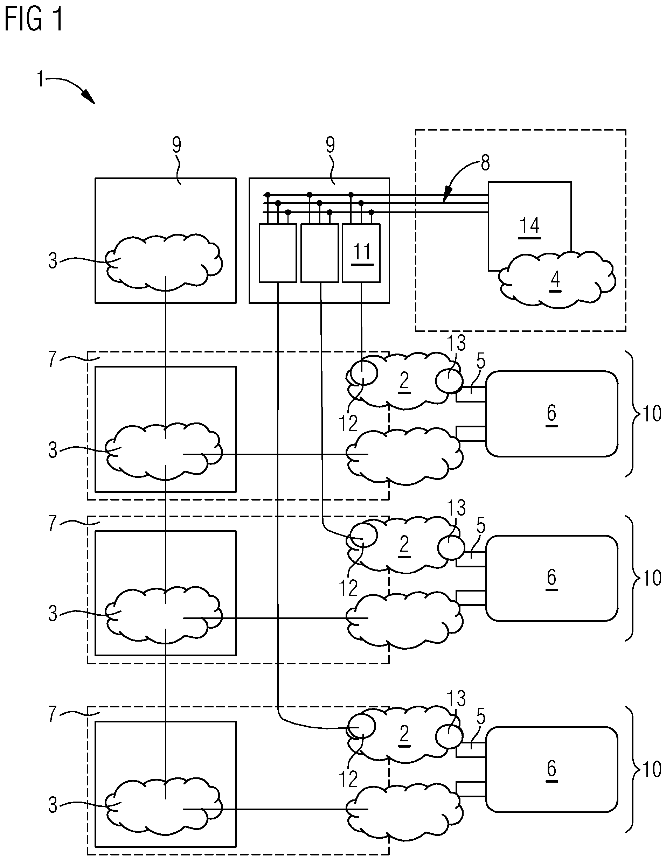

Figur 1: Eine schematische Darstellung eines Ausführungsbeispiels der Anordnung, umfassend drei Leitungen, drei Netzwerke und drei Module, wobei die Anzahl der Leitungen unabhängig von der Zahl der Netzwerke und/oder Module ist.

Figur 1 stellt wie oben beschrieben ein Ausführungsbeispiel der erfindungsgemäßen Anordnung dar. Die gesamte Anordnung ist mit dem Bezugszeichen 1 versehen. Die Anordnung umfasst eine Elektrolysevorrichtung, dient also zur Durchführung einer Elektrolysereaktion. Die Anordnung dient weiterhin der Datenübertragung in dargestellte Netzwerke 2, um sicherheitsrelevante Funktionen der Elektrolysevorrichtung (Notaus etc.) zu gewährleisten.

Zuerst wird Figur 1, um ein Grundverständnis zu ermöglichen, rein schematisch beschrieben.

Die Anordnung 1 umfasst beispielhaft zwei zentrale Schaltschränke 9 und eine Flotte mit mehreren Modulen 10, die Elektrolyseure 6 umfassen. Hier sind beispielhaft 3 Module gezeigt, die jeweils einen eigenen Schaltschrank 7 umfassen.

Für die Steuerung des Normalbetriebs ist ein Steuerungsnetzwerk 3 vorgesehen. Das Steuerungsnetzwerk 3 steuert über eine zentrale Flottensteuerungseinheit in einem der zentralen Schaltschränke 9 aus die einzelnen Modulsteuerungseinheiten in den Schaltschränken 7 der Module und diese wiederum den Betrieb der einzelnen Elektrolyseure 6.

Vollkommen autark existieren daneben Sicherheits-Netzwerke, die sicherheitsrelevante Funktionen der Elektrolyseure 6 im Alarmfall sicherstellen.

Hierfür ist eine autarke zentrale Schnittstelle 14 zu einem externen Netzwerk des Betreibers 4 vorgesehen. Die Schnittstelle 14 ist über analoge Leitungen 8, z.B. in Form von elektrische leitenden Drähten mit in einem zentralen Schaltschrank 9 angeordneten Analog-Digital-Wandlern 11 verbunden, die aus eingehenden analogen Anweisungen zentral im Schaltschrank 9 digitale Anweisungen erzeugen.

Die digitalen Anweisungen werden über eine digitale Netzwerkinfrastruktur zwischen den Analog-Digital-Wandlern 11 und zweiten Elementen 12 in den Schaltschränken 7 der Module 10 übertragen. Die zweiten Elemente 12 wandeln die eingehenden Daten dann in Steuerdaten für die Aktoren 13 des jeweiligen Moduls 10 und deren Stellglieder 15 um.

Über die Stellglieder 15 können die Aktoren 13 direkt Einfluss auf die sicherheitsrelevanten Betriebseinstellungen der Elektrolyseure 6 nehmen.

Weiterhin wird die Anordnung zum besseren Verständnis im Folgenden anhand von Figur 1 nochmals ausführlich auf funktioneller Ebene erklärt.

Vorrichtungen zur Elektrolyse sind bevorzugt skalierbar aufgebaut, um es einem Betreiber der Vorrichtung zu ermöglichen, eine gewünschte Menge an zur Verfügung stehenden Strom zur Wasserstoffproduktion einzusetzen.

Die erforderliche Skalierbarkeit lässt sich einfach erreichen, indem eine einzelne Elektrolysevorrichtung mehrere Module mit Elektrolyseuren umfasst. In der Praxis sind vorteilhafterweise wiederum mehrere Elektrolyseure, denen eine gemeinsame Peripherie (z.B. Gasversorgung, Wasserversorgung, Heizung, Stromzufuhr) zur Verfügung steht, in einem Modul zusammengefasst.

Die gesamte Vorrichtung umfasst also aus einer Vielzahl von Modulen und Elektrolyseuren. Die gesamte Vielzahl an Modulen wird auch Flotte genannt.

Um die Bedienung und Steuerung der gesamten Flotte durch den Betreiber zu vereinfachen und um Sicherheitsfunktionalitäten wie Notaus zentral für die gesamte Flotte steuern zu können, ist eine gemeinsame zentrale elektronische Ansteuerung der gesamten Flotte vorteilhaft.

Zur Steuerung der Flotte im gewöhnlichen Betrieb ist insbesondere ein Steuerungsnetzwerk 3 vorgesehen, das eine so genannte Fleet Control Unit (Flottenkontrolleinheit, FCU), also eine elektronische Steuerungseinheit für die gesamte Flotte umfasst.

Die Fleet Control Unit ist sowohl als physische wie auch als logische Einheit zu betrachten und umfasst mindestens einen Schaltschrank mit einer CPU (central processing unit, zentrale Recheneinheit). Die FCU fungiert hier dann als Schnittstelle für den Betreiber der Flotte und steuert einzelne Module Control Units (Modulkontrolleinheit, MCU) der Module an. Die MCUs müssen nicht zwingend eine eigene logische Einheit umfassen.

Neben der Steuerung im Normalbetrieb, ist es Teil der Erfindung, dem Betreiber der Flotte eine weitere zentrale Schnittstelle zu Übertragung sicherheitsrelevanter Anweisungen an die gesamte Flotte bereitzustellen, ein sogenanntes Safety Instrumented System (sicherheitsinstrumentiertes System, SIS). Das SIS ist aus sicherheitsgründet vollständig vom Steuerungsnetzwerk 3 entkoppelt, es findet also kein Datentransfer zwischen den Steuerungsnetzwerk 3 und dem SIS statt.

Besagte sicherheitsrelevanten Anweisungen umfassen z.B. Notaus, Gasalarm, Feueralarm, Überhitzung der Raumtemperatur, Stickstoff-Versorgungs-Alarm etc.

Nachfolgend wird insbesondere der Aufbau des SIS beschrieben.

In der gezeigten Ausführung ist ein gemeinsamer erster zentraler Schaltschrank 9 für das SIS der gesamten Flotte vorgesehen, in dem für jedes Modul 10 der Flotte ein erstes Element 11 eines Netzwerkes 2 vorgesehen ist.

Die FCU kann in demselben oder einem anderen zentralen Schaltschrank untergebracht sein, ist aber in jedem Fall logisch vom SIS getrennt.

Die ersten Elemente 11 sind im gezeigten Ausführungsbeispiel Analog-Digital-Wandler, die dazu eingerichtet sind, jeweils Daten in ein dem jeweiligen Modul 10 zugehöriges Netzwerk 2 einzuleiten und im Netzwerk 2 als Pegeldaten bereitzustellen. Die ersten Elemente 11 sind definitionsgemäß Teil der Netzwerke 2.

Über die Netzwerke 2 werden die Pegeldaten anschließend an die entsprechenden Module 10, insbesondere an Schaltschränke 7 der einzelnen Module 10, bzw. in den Schaltschränken angeordnete zweite Elemente 12, übertragen.

Die Entfernung zwischen ersten und zweiten Elementen ist dabei flexibel einrichtbar. Die Übertragung der Pegeldaten erfolgt über eine dafür vorgesehene Netzinfrastruktur, insbesondere über LAN. Somit können die ersten und die zweiten Schaltschränke räumlich entfernt angeordnet werden.

Die in den Schaltschränken angeordneten zweiten Elemente 12 sind beispielsweise LAN-Switches oder ähnliche Geräte, die die über LAN empfangenen Pegeldaten in Steuerdaten für die an die zweiten Elemente über das jeweilige Netzwerk 2 elektronisch angeschlossenen Aktoren 13 (oder auch "dritten Elemente 13") umwandelt.

Die zweiten und dritten Elemente 12 und 13 sind ebenso wie die Netzinfrastruktur definitionsgemäß Teil der Netzwerke 2.

Die Aktoren 13 steuern die Stellglieder 5 im oder am Elektrolyseur 6 an und nehmen so Einfluss auf den Betrieb des Elektrolyse-Prozesses, z.B. indem die Stromzufuhr, die Wasserzufuhr und/oder die Beheizung der Module 10 an- oder abgeschaltet wird.

Jedes der ersten Elemente 11 ist weiterhin im ersten zentralen Schaltschrank 9 mit Leitungen 8 verbunden, über die den ersten Elementen analoge Spannungspegel bereitgestellt werden. Das heißt jedes erste Element wird so betrieben, dass mehrere analoge Eingänge der Leitungen 8 (Spannungspegel) in einen digitalen Ausgang gewandelt werden, der als Pegeldaten dem Netzwerk 2 zur Verfügung gestellt wird (auch "remote" über LAN).

Durch ein viertes Element 14 im oder außerhalb des zentralen Schaltschranks 9 sind die Leitungen mit dem externen Netzwerk 4 des Betreibers gekoppelt.

Mit anderen Worten, der Betreiber kann aufgrund der erfindungsgemäßen Anordnung 1, der Flotte sicherheitsrelevante Anweisungen und Daten zur Verfügung stellen. Insbesondere können Befehle wie Notaus zentral an die Flotte übermittelt werden. Insbesondere können zum Beispiel ein manuell ausgelöster Alarm (Notaus) oder automatisch aufgrund von Sensordaten des Betreibers ausgelöste Alarme (Gasalarm, Feueralarm) an die Flotte weitergeleitet werden.

Es ist für den Betreiber praktikabel solche Anweisungen nur einmal an die gesamte Flotte anstatt an einzelne Module 10 weiterzugeben und beispielsweise die gesamte Flotte zentral notauszuschalten. Daher ist erfindungsgemäß ein zentraler Schaltschrank 9 und eine gemeinsame Schnittstelle 14 für die gesamte Flotte vorgesehen, an der das externe Netzwerk 4 des Betreibers angeschlossen werden kann.

Jedem möglichen Eingang aus dem externen Netzwerk 4 ist an der Schnittstelle 14 eine entsprechende Leitung 8 zugeordnet. Beispielsweise ist also eine Leitung 8 dem Feueralarm, eine weitere Leitung 8 dem Gasalarm und eine dritte Leitung 8 dem manuell betätigbaren Notaus-Schalter zugeordnet.

Die Leitungen 8 übertragen die über die Schnittstelle 14 eingehenden Spannungspegel im Schaltschrank 9 jeweils an jedes der ersten Elemente 11, bei denen es sich bevorzugt um (Remote-)Analog-Digital-Wandler handelt.

Bevorzugt ist jede der Leitungen 8, wie in Figur 1 beispielhaft gezeigt, matrixartig mit jedem der Wandler 11 verknüpft, wobei die analogen Spannungspegel der Leitungen in den Wandlern 11 in digitale Pegeldaten (0 oder 1) umgewandelt werden und per LAN an die beliebig nah oder entfernt von dem Schaltschrank 9 befindlichen Module 10 über das Netzwerk 2 übermittelt werden.

Bevorzugt ist dem Schnittstellenelement 14 weiterhin eine Transformationseinheit vorgeschaltet, die die Vielzahl möglicher Eingänge/Ereignisse in eine erschöpfende Zahl an Anweisungen, insbesondere in eine erschöpfende Zahl an definierten Spannungspegeln, transformiert.

So sind die Leitungen 8 bevorzugt dazu eingerichtet, genau zwei definierte Spannungspegel zu übertragen, zum Beispiel 0 V und 24 V oder zwei andere definierte diskrete Spannungen.

Diese beiden Spannungspegel können von dem Analog-Digital-Wandler dann entsprechend in digitale Daten 1 und 0 umgewandelt werden und den Netzwerken 2 zur Verfügung gestellt werden.

### Bezugszeichen

- 1: Anordnung
- 2: Netzwerk
- 3: Steuerungsnetzwerk
- 4: externes Netzwerk
- 5: Stellglied
- 6: Elektrolyseur
- 7: Schaltschrank (pro Modul)
- 8: Leitungen
- 9: zentraler Schaltschrank
- 10: Modul
- 11: erstes Element (Analog-Digital-Wandler)
- 12: zweites Element (LAN-Switch)
- 13: drittes Element (Aktor)
- 14: viertes Element (Schnittstelle)

## Patentansprüche

1. Anordnung (1) zur Datenübertragung in ein Netzwerk (2) umfassend eine Leitung (8), das mit der Leitung (8) verbundene Netzwerk (2), sowie ein Modul (10) aufweisend ein Stellglied (5) und einen Elektrolyseur (6),
wobei das Netzwerk (2) zum Ansteuern des Stellgliedes (5) des Moduls (10) eingerichtet ist, wobei das Stellglied (5) zum Eingreifen in den prozessualen Betrieb des Elektrolyseurs (6) eingerichtet ist,
wobei das Netzwerk (2) ein erstes Element (11), eingerichtet zum Einleiten von Daten umfasst, wobei das erste Element (11) dazu eingerichtet ist, Spannungspegel von der Leitung (8) zu erfassen und die erfassten Spannungspegel in dem Netzwerk (2) als Pegeldaten bereitzustellen,
wobei das Netzwerk (2) ein zweites Element (12), eingerichtet zum Verarbeiten der Pegeldaten und zum Ausgeben von Steuerdaten umfasst, und
wobei das Netzwerk ein drittes Element (13), eingerichtet zum Empfangen der Steuerdaten und zum Ansteuern des Stellgliedes (5) umfasst.

2. Anordnung (1) nach Anspruch 1, wobei das Netzwerk (2) derart ausgebildet ist, dass Daten lediglich in das Netzwerk (2) eingeleitet werden oder derart ausgebildet ist, dass Daten bidirektional in das Netzwerk (2) eingeleitet und aus dem Netzwerk (2) ausgeleitet werden, wobei das Netzwerk (2) bevorzugt autark ist.

3. Anordnung (1) nach einem der Ansprüche 1 bis 2, wobei die Anordnung (1) mehrere Leitungen (8) umfasst,
wobei das erste Element (11) dazu eingerichtet ist, Spannungspegel von den mehreren Leitungen (8) zu erfassen und die erfassten Spannungspegel in dem Netzwerk (2) als Pegeldaten bereitzustellen,

4. Anordnung (1) nach einem der Ansprüche 1 bis 3, wobei das Modul (10) mehrere Stellglieder (5) umfasst,
wobei das dritte Element (13) dazu eingerichtet ist, die mehreren Stellglieder (5) des Moduls (10) anzusteuern.

5. Anordnung (1) nach einem der Ansprüche 1 bis 4, die einen gemeinsamen ersten Schaltschrank (9) und pro Modul einen separaten zweiten Schaltschrank (7) umfasst, wobei das erste Element (11) von dem zweiten Element (12) derart räumlich distanziert angeordnet ist, dass das erste Element (11) in dem gemeinsamen ersten Schaltschrank (9) angeordnet ist und das zweite Element (12) jeweils in dem separaten zweiten Schaltschrank (7) pro Modul angeordnet ist.

6. Anordnung (1) nach einem der Ansprüche 1 bis 5, wobei die Anordnung (1) mehrere Netzwerke (2) und dieselbe Anzahl an mehreren Modulen (10) umfasst,
wobei jedes der Netzwerke (2) jeweils zum Ansteuern des Stellgliedes (5) eines der Module (10) eingerichtet ist, derart eingerichtet, dass die Leitung (8) parallelgeschaltet mit jedem der mehreren Netzwerke (2) verbunden ist, sodass jedem der ersten Elemente (11) des jeweiligen Netzwerkes (2) in Gänze gleiche Spannungspegel bereitgestellt sind.

7. Anordnung (1) nach den Ansprüchen 5 und 6, wobei die ersten Elemente (11) der mehreren Netzwerke (2) alle in dem gemeinsamen ersten Schaltschrank (9) montiert sind und wobei jedes der mehreren Module (10) jeweils einen der separaten zweiten Schaltschränke (7) umfasst, wobei das zweite Element (12) jedes der Module (10) jeweils separat in dem zweiten Schaltschrank (7) des jeweiligen Moduls (10) angeordnet ist.

8. Anordnung (1) nach einem der Ansprüche 1 bis 7, wobei die Leitung (8) dazu eingerichtet ist, zwei Spannungspegel zu übertragen, die die Zustände 0 bzw. 1 repräsentieren.

9. Anordnung (1) nach Anspruch 8, wobei zwei Spannungspegel 0 Volt und 24 Volt sind.

10. Anordnung (1) nach einem der Ansprüche 1 bis 9, wobei die Leitung (8) als fest verdrahtete Zweidrahtleitung ausgeführt ist.

11. Anordnung (1) nach einem der Ansprüche 1 bis 10, umfassend ein viertes Element (14) zum Bereitstellen der Spannungspegel, wobei das vierte Element (14) mit der Leitung (8) und einem externen Netzwerk (4) gekoppelt ist.

12. Anordnung (1) nach Anspruch 11, wobei dem vierten Element (14) eine Transformationseinheit vorgeschaltet ist, die dazu eingerichtet ist, mehrere mögliche Ereignisse in eine erschöpfte Anzahl an Anweisungen zu transformieren.

13. Anordnung (1) nach einem der Ansprüche 1 bis 12, wobei die Leitung (8) eine sicherheitsrelevante Anweisung repräsentiert, wobei, wenn mehrere der Leitungen (8) vorgesehen sind, jede der Leitungen (8) eine jeweils andere sicherheitsrelevante Anweisung repräsentiert.

14. Anordnung (1) nach Anspruch 13, wobei die Anweisung aus der Menge der Anweisungen Notaus, Gasalarm, Feueralarm, Überhitzung der Raumtemperatur, Stickstoff-Versorgungs-Alarm ausgewählt ist.

15. Anordnung (1) nach einem der Ansprüche 1 bis 14, wobei das Netzwerk derart ausgebildet ist, dass darin ein LAN-Standard verwendet wird.

## Geänderte Patentansprüche

### Geänderte Patentansprüche gemäss Regel 137(2) EPÜ.

1. Anordnung (1) zur Datenübertragung in ein Netzwerk (2) umfassend eine Leitung (8), das mit der Leitung (8) verbundene Netzwerk (2), sowie ein Modul (10) aufweisend ein Stellglied (5) und einen Elektrolyseur (6),
wobei das Netzwerk (2) zum Ansteuern des Stellgliedes (5) des Moduls (10) eingerichtet ist, wobei das Stellglied (5) zum Eingreifen in den prozessualen Betrieb des Elektrolyseurs (6) eingerichtet ist,
wobei das Netzwerk (2) ein erstes Element (11), eingerichtet zum Einleiten von Daten umfasst, wobei das erste Element (11) dazu eingerichtet ist, Spannungspegel von der Leitung (8) zu erfassen und die erfassten Spannungspegel in dem Netzwerk (2) als Pegeldaten bereitzustellen,
wobei das Netzwerk (2) ein zweites Element (12), eingerichtet zum Verarbeiten der Pegeldaten und zum Ausgeben von Steuerdaten umfasst, und
wobei das Netzwerk ein drittes Element (13), eingerichtet zum Empfangen der Steuerdaten und zum Ansteuern des Stellgliedes (5) umfasst.

2. Anordnung (1) nach Anspruch 1, wobei das Netzwerk (2) derart ausgebildet ist, dass Daten lediglich in das Netzwerk (2) eingeleitet werden oder derart ausgebildet ist, dass Daten bidirektional in das Netzwerk (2) eingeleitet und aus dem Netzwerk (2) ausgeleitet werden, wobei das Netzwerk (2) bevorzugt autark ist.

3. Anordnung (1) nach einem der Ansprüche 1 bis 2, wobei die Anordnung (1) mehrere Leitungen (8) umfasst,
wobei das erste Element (11) dazu eingerichtet ist, Spannungspegel von den mehreren Leitungen (8) zu erfassen und die erfassten Spannungspegel in dem Netzwerk (2) als Pegeldaten bereitzustellen.

4. Anordnung (1) nach einem der Ansprüche 1 bis 3, wobei das Modul (10) mehrere Stellglieder (5) umfasst,
wobei das dritte Element (13) dazu eingerichtet ist, die mehreren Stellglieder (5) des Moduls (10) anzusteuern.

5. Anordnung (1) nach einem der Ansprüche 1 bis 4, die einen gemeinsamen ersten Schaltschrank (9) und pro Modul einen separaten zweiten Schaltschrank (7) umfasst, wobei das erste Element (11) von dem zweiten Element (12) derart räumlich distanziert angeordnet ist, dass das erste Element (11) in dem gemeinsamen ersten Schaltschrank (9) angeordnet ist und das zweite Element (12) jeweils in dem separaten zweiten Schaltschrank (7) pro Modul angeordnet ist.

6. Anordnung (1) nach einem der Ansprüche 1 bis 5, wobei die Anordnung (1) mehrere Netzwerke (2) und dieselbe Anzahl an mehreren Modulen (10) umfasst,
wobei jedes der Netzwerke (2) jeweils zum Ansteuern des Stellgliedes (5) eines der Module (10) eingerichtet ist, derart eingerichtet, dass die Leitung (8) parallelgeschaltet mit jedem der mehreren Netzwerke (2) verbunden ist, sodass jedem der ersten Elemente (11) des jeweiligen Netzwerkes (2) in Gänze gleiche Spannungspegel bereitgestellt sind.

7. Anordnung (1) nach den Ansprüchen 5 und 6, wobei die ersten Elemente (11) der mehreren Netzwerke (2) alle in dem gemeinsamen ersten Schaltschrank (9) montiert sind und wobei jedes der mehreren Module (10) jeweils einen der separaten zweiten Schaltschränke (7) umfasst, wobei das zweite Element (12) jedes der Module (10) jeweils separat in dem zweiten Schaltschrank (7) des jeweiligen Moduls (10) angeordnet ist.

8. Anordnung (1) nach einem der Ansprüche 1 bis 7, wobei die Leitung (8) dazu eingerichtet ist, zwei Spannungspegel zu übertragen, die die Zustände 0 bzw. 1 repräsentieren.

9. Anordnung (1) nach Anspruch 8, wobei zwei Spannungspegel 0 Volt und 24 Volt sind.

10. Anordnung (1) nach einem der Ansprüche 1 bis 9, wobei die Leitung (8) als fest verdrahtete Zweidrahtleitung ausgeführt ist.

11. Anordnung (1) nach einem der Ansprüche 1 bis 10, umfassend ein viertes Element (14) zum Bereitstellen der Spannungspegel, wobei das vierte Element (14) mit der Leitung (8) und einem externen Netzwerk (4) gekoppelt ist.

12. Anordnung (1) nach Anspruch 11, wobei dem vierten Element (14) eine Transformationseinheit vorgeschaltet ist, die dazu eingerichtet ist, mehrere mögliche Ereignisse in eine erschöpfte Anzahl an Anweisungen zu transformieren.

13. Anordnung (1) nach einem der Ansprüche 1 bis 12, wobei die Leitung (8) eine sicherheitsrelevante Anweisung repräsentiert, wobei, wenn mehrere der Leitungen (8) vorgesehen sind, jede der Leitungen (8) eine jeweils andere sicherheitsrelevante Anweisung repräsentiert.

14. Anordnung (1) nach Anspruch 13, wobei die Anweisung aus der Menge der Anweisungen Notaus, Gasalarm, Feueralarm, Überhitzung der Raumtemperatur, Stickstoff-Versorgungs-Alarm ausgewählt ist.

15. Anordnung (1) nach einem der Ansprüche 1 bis 14, wobei das Netzwerk derart ausgebildet ist, dass darin ein LAN-Standard verwendet wird.
